## Europäisches Patentamt

## European Patent Office

## Office européen des brevets

(11) Publication number: **0 121 292**
**B1**

## EUROPEAN PATENT SPECIFICATION

(45) Date of publication of patent specification: **27.07.88**

(51) Int. Cl.⁴: **F 21 L 9/00** ·

(21) Application number: **84300278.3**

(22) Date of filing: **17.01.84**

(54) Miner's lamp power pack recharging.

(30) Priority: **31.03.83 CA 425094**

(43) Date of publication of application:
**10.10.84 Bulletin 84/41**

(45) Publication of the grant of the patent:
**27.07.88 Bulletin 88/30**

(84) Designated Contracting States:
**AT CH DE FR GB IT LI SE**

(56) References cited:
**DE-A-2 702 129**
**FR-A- 881 403**
**FR-A-2 506 895**
**US-A-1 754 570**
**US-A-2 312 614**
**US-A-2 628 339**
**US-A-3 517 185**
**US-A-3 665 285**
**US-A-3 723 947**

(73) Proprietor: **LEVITT-SAFETY LIMITED**
**33 Laird Drive**
**Toronto Ontario M4G 3S9 (CA)**

(72) Inventor: **Lane, Kerry S.**
**208 Lorne Avenue**
**Newmarket Ontario L3Y 4K2 (CA)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

This invention relates to a lamp having rechargeable cell power pack and electrical recharging device for the power pack.

It is common to use lamps with rechargeable power packs because of their dependability and low maintenance cost Such lamps have many industrial applications, such as in underground work in mines, tunnels and the like. Quite often the lamp is secured to the helmet of the user and the power pack is secured to the user's waist. Electrical wiring delivers power from the power pack to the lamp on the helmet. Normally at the end of each working shift, the lamp and power pack are removed and placed in a recharging device, so that the power pack is ready for reuse at the next working shift.

An example of this type of lamp is disclosed in US-A-2,312,614. The power pack includes a plurality of batteries which are rechargeable. Electrical wiring connects a lamp which is securable to the worker's helmet to the batteries. The batteries are normally the wet cell, lead acid storage battery type which include appropriate venting devices to prevent electrolyte spillage. However, some electrolyte leakage can occur where the leaked acid damages the user's clothes and skin.

The power pack is charged by either using the lamp, which has appropriate electrodes for connection to a charging circuit, or connecting the battery to a charging circuit. In this United States patent, examples of both techniques are disclosed. In recharging the battery, it is important that it be positioned upright to provide proper venting of the battery during charging and to preclude electrolyte spillage. Recharging of the battery by use of the lamp is also disclosed in US-A-2,066,811. Electrodes are positioned at the base of the lamp which are connected to a recharging circuit. By appropriately adjusting the control switch, the battery may be recharged during non-use. However, such arrangement requires the user to properly adjust the switch at the end of the shift and insert the lamp in the recharging device.

Insofar as recharging the battery where electrodes are positioned on the battery, an example is disclosed in US-A-4207606. In this arrangement, several electrodes are positioned on the battery where at least two of the electrodes will form electrical contact with the recharging circuit to recharge the battery. Another example of external electrodes on the battery for purposes of recharging is in US-A-4,317,162. The battery construction has the common lead acid arrangement with positive and negative charging terminals on the battery exterior. Because of the use of lead acid storage batteries, the unit must be retained in the upright position for purposes of recharging to prevent electrolyte spillage.

The use of nickel-cadmium batteries have become very popular because they are dry cell, hold their charge, have good discharge characteristics and are readily rechargeable. However, in the lamp field particularly for use in mining and the like, nickel-cadmium batteries are not that extensively used. Instead the lead acid form of batteries is by far the most popular.

The invention provides in combination, a rechargeable dry cell power pack connected to a lamp by electrical wiring, a recharging device having charging electrodes for charging the power pack when electrically in contact with corresponding power pack electrodes, and means for supporting the power pack when connected to the recharging device, the combination being characterised in that the power pack has a slightly curved inner face portion to conform to and be adjacent tc a user's hip with the power pack electrodes positioned on such inner face portion and in that the recharging device comprises a socket having opposed curved surfaces with the charging electrodes positioned on one of said opposed curved surfaces, the socket being shaped and dimensioned to receive at least the lower portion of the power pack in only one orientation and to support the power pack in the socket with the charging electrodes in electrical contact with the power pack electrodes.

The recharging device includes controlling circuitry which actuates the recharging of the power pack cnce inserted into the socket. Because of the one way registration of the power pack with the socket, recharging of the power pack is assured. The electrodes on the power pack may be arranged so as to be against the user's hip and protect them from dirt and other debris in the working environment. Thus when the power pack is pushed into the socket, the electrodes slidingly engage one another to provide sound electrical contact for recharging the power pack.

Preferred embodiments of the invention are shown in the drawings wherein:

Figure 1 is a perspective view showing the lamp with accompanying power pack therefor;

Figure 2 is a perspective view of the inner surface of the power pack of Figure 1;

Figure 3 is a section through the power pack showing a detail of one of the recharging contact electrodes;

Figure 4 is a perspective view of several recharging devices for recharging a plurality of the power packs of Figure 2;

Figure 5 is a side elevation of a power pack inserted in the socket of a recharging device;

Figure 6 is a perspective view of the interior of the socket of a recharging device and;

Figure 7 is a section through the recharging device demonstrating the insertion of the power pack into the socket of the recharging device.

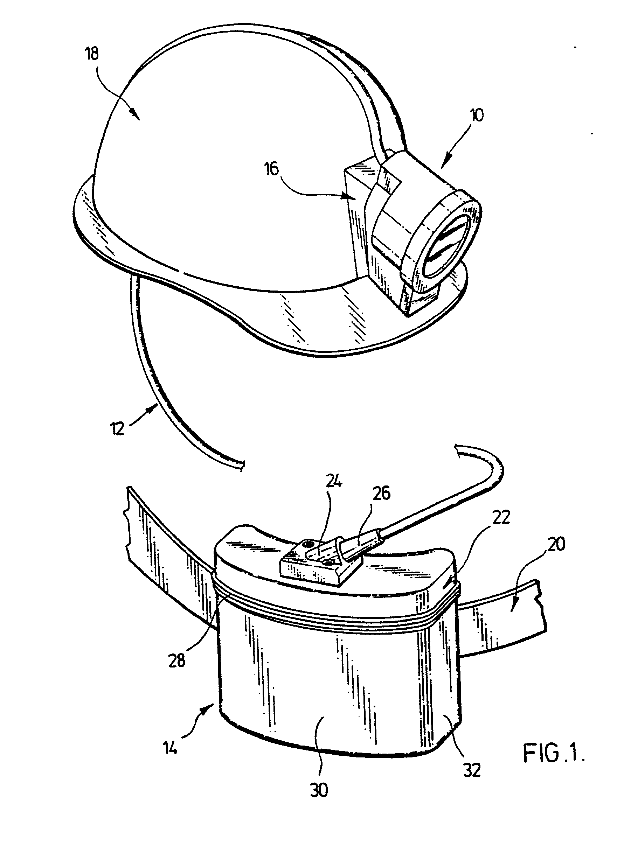

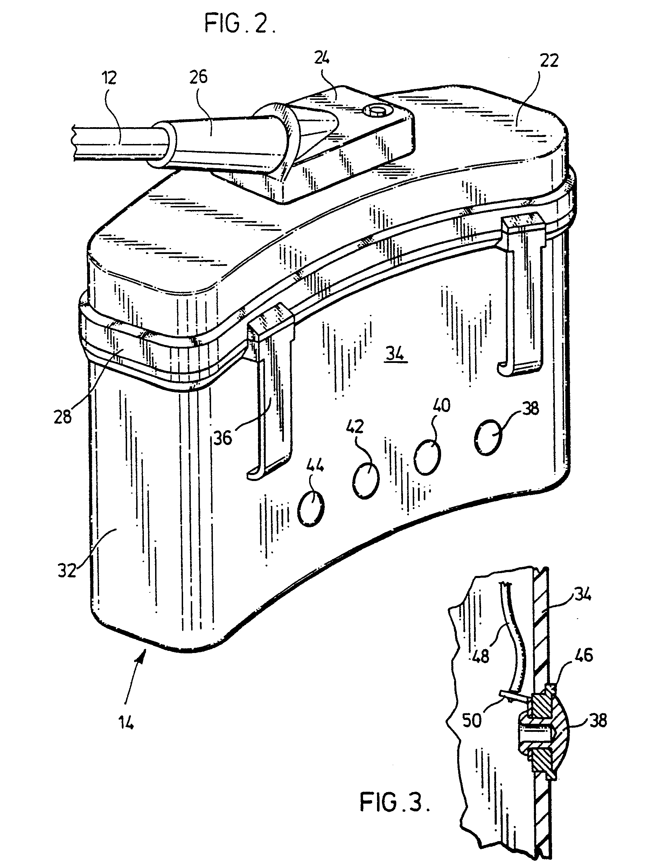

The lamp and power pack, according to this invention, can be used in many ways as already exemplified. It is appreciated that the lamp may be directly connected to the power pack, such as a handheld lamp arrangement or the lamp may be remote from the power pack and electrically connected thereto by wiring to permit positioning of the lamp, for example, on the user's headgear and securement of the power pack to the user's waist. This last embodiment is demonstrated in Figure 1 where a lamp 10 is electrically connected by wiring 12 to its power pack 14. The lamp is releasably connected by way of an attachment arrangement generally designated 16 on the user's helmet or hardhat 18. The power pack 14 is secured to the user's waist by way of a belt 20. The electrical wiring 12 is secured to the upper portion 22 of the power pack 14 by a water tight angled connector 24 which has a bushing 26 to anchor the wiring 12 into the connector 24. Recessed bolts having slightly oval heads, as shown in Figure 2, are used to secure the connector to the upper portion 22. A special tool is required to loosen the bolts to prevent the user from opening the power packs and possibly damaging the dry cells. The wiring 12 is of sufficient length so as to comfortably permit location of the lamp 10 on the hardhat 18 and allow the user, such as a miner, to freely move about.

The upper portion 22 of the power pack is hermetically sealed at 28 to the remainder of the casing of the power pack to ensure waterproof containment of dry cells within the power pack. There may be several dry cells located within the casing of the power pack, such as five circular cells which are electrically interconnected to provide power by way of the electrical wiring 12 to the lamp 10.

As can be appreciated from Figure 1, the power pack has an outer face 30, opposing sidewalls 32 and a rear wall 34 as shown in Figure 2. Located on the rear wall are integrally cast belt loop portions 36 through which the belt 20 passes for purposes of mounting the power pack 14 on the user's hip. The power pack is crescent or curved shaped so that the interior surface 34 approximates the shape of the user's hip to provide comfort in use and a reasonably contiguous location of the inner surface 34 of the power pack against the user's hip. Such contiguous location protects and keeps reasonably clean the recharging electrodes 38, 40, 42 and 44 located on the rear surface 34 of the power pack. During use of the power pack and lamp, because the inner surface 34 is curved debris in the work environment is shielded from the electrodes on the rear of the power pack and by constant rubbing of the electrodes against the user's clothing, the contacts are kept reasonably clean.

Figure 3 shows the shape of the electrical contact 38 as it protrudes slightly beyond the rear surface 34. The metal electrical contact 38 is hermetically sealed by sealing ring 46 to the rear wall panel 34. Internally of the power pack 14, an electrical wire 48 is connected to terminal 5) of the electrode 38 to deliver power applied to electrode 38 in recharging the batteries within the power pack.

The dry cell power packs are preferably the rechargeable nickel-cadmium type batteries which have superior discharge characteristics. It is appreciated, however, that other forms of dry cell rechargeable battery arrangements may be used. The advantage in using dry cells is that the power pack may be oriented in any direction without concern of electrolyte spillage nor venting of the battery. In addition, the dry cell arrangement also permits the curving of the power pack to comfortably fit the user's hip and as a result, the power pack takes on in cross-section an irregular shape. Advantage can then be taken of the irregular shape for purposes of inserting the power pack in a socket of a recharging device. Such irregular shape, with an appropriately shaped socket, will only receive the power pack in one orientation so that matching of the recharging electrodes can be accomplished for purposes of recharging the power pack.

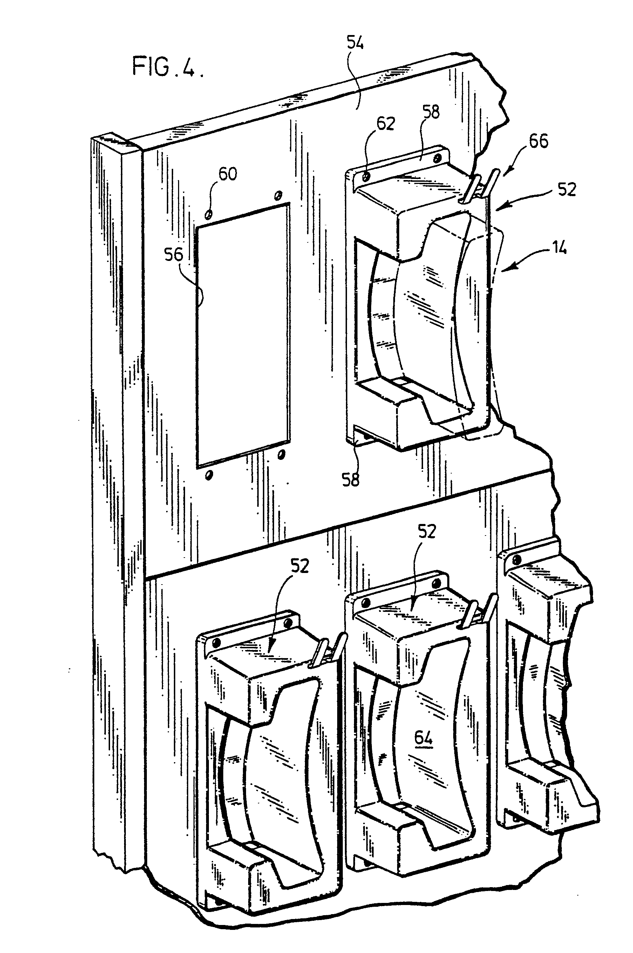

Referring to Figure 4, several recharging devices 52 are mounted on a vertical wall panel 54. The wall panel includes a plurality of cutouts 56 which receive the base portion of each recharging device 52. Flanges 58 are provided on the top and bottom of each recharging device 52. Apertures 60 are drilled in the wall panels so that self-tapping screws 62 secure the flanges 58 to the vertical panels and, in turn, provide an array of recharging devices. As shown in shadowed line, the power pack 14 is inserted in the socket area 64 of the recharging device 52 for purposes of recharging. A hook arrangement 66 is provided on which the lamp to the power pack 14 may be positioned while the battery is recharging. Thus at the end of a shift or the end of a work project, the user may remove the power pack and lamp, simply push the power pack into the recharging device, hang the lamp on hook arrangement 66 without any further need to adjust switches or the like to ensure recharging of the power pack 14.

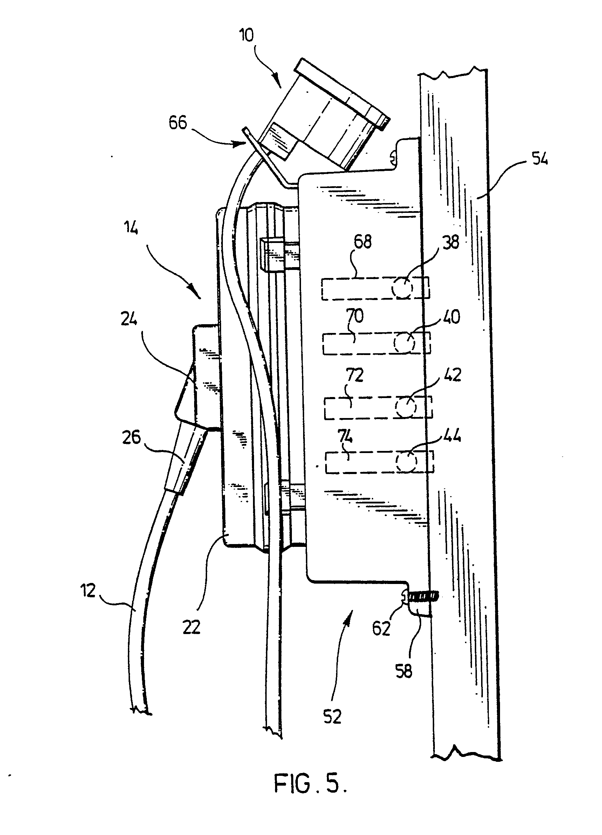

Referring to Figure 5, a side elevation of the recharging array is shown. The power pack 14 is pushed into the recharging device 52 where the lamp 10 is placed on hook 66 with the electrical cord 12 extending in a looped manner from the recharging device 12 to the lamp 10. The electrodes in the recharging device are shown in dot at 68, 70, 72 and 74 to correspond with electrodes 38, 40, 42 and 44 on the rear surface of the power pack. To facilitate insertion of the power pack into the recharging device, the orderly location of the cord connecting the lamp to power pack is achieved by orienting the sockets to extend vertically, as shown in Figure 4. The wiring connector 24 with its bushing 26 is oriented on the top 22 of the power pack so that the electrical wiring 12 extends downwardly from the power pack to form the loop in the wiring with the lamp 10 on the hook 66. Thus with the vertical orientation of the power pack, the wiring is looped in an orderly fashion for each power pack along the array of recharging devices.

Because of the use of the dry cells resulting in the curved shape for the power packs, then appropriately shaping the socket 64 to only receive the power pack in the single orientation facilitates manipulation of the unit by the user to readily ensure recharging of the device. Electronic circuitry well understood in the art is located within each recharging device 52 or at a central control panel where the electrodes 68, 70, 72 and 74 are connected to such circuitry to sense when a power pack is inserted in the recharging socket to determine the charge on the battery and actuate recharging power on the electrodes 68 through 74 to properly recharge the battery at an acceptable rate. A thermocouple may be located in the battery to determine its interior temperature relative to the ambient temperature and cutoff the recharging should the battery begin to overheat. All such techniques are well understood in the art and are not described in detail here.

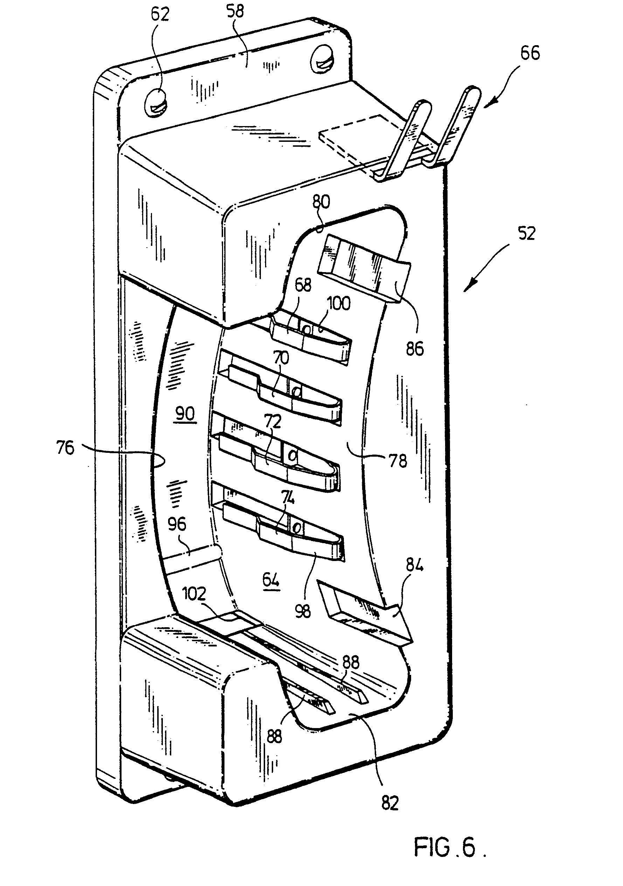

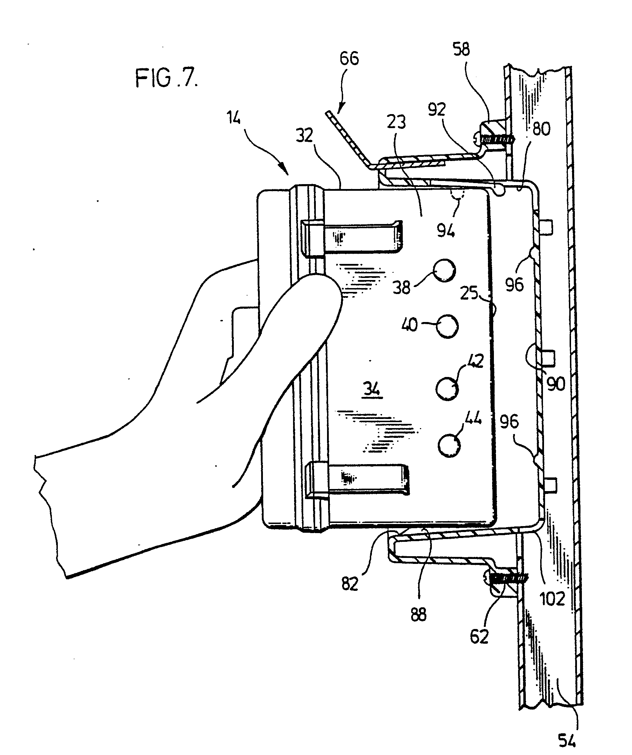

The recharging device 52 is shown in more detail in Figure 6. The socket 64 in the recharging device 52 is defined by a curved front wall 76, opposing rear wall 78 and opposing top and bottom walls 80 and 82. Provided in the curved rear wall 78 are two recesses 84 which are of sufficient width and depth to receive the belt loop portions 36 on the rear face 34 of the power pack. The curvature, width, height and depth dimensions of the socket 64 are such to only receive the power pack in one orientation and to snugly receive the power pack in the manner shown in Figure 7. The bottom wall 82 includes ramp portions 88 which guide the insertion of the power pack 14 into the socket 64. The lower portion 23 of the power pack is guided by the curvature of the socket 64 towards the base 90 of the socket. The upper wall 80 of the socket includes a spring detent 92 which is sprung upwardly by the sidewall 32 of the power pack during insertion into the socket. A dimple 94, shown in dot in the sidewall 32 of the power pack, mates with the spring detent 92 when the bottom 25 of a power pack contacts raised ridges 96 on the base 90 of the recharging sockets. This provides a snap action clipping of the power pack in the socket to first of all give an audible signal that the power pack is in position for recharging, and secondly to retain the power pack in the recharging socket, so as to avoid the power pack falling out of the socket as a result of any vibrations or the like from the industrial surroundings. Thus with the power pack fully inserted into the socket, the electrodes 38, 40, 42 and 44 of the power pack have contacted and have slid along corresponding electrodes 68, 70, 72 and 74 of the recharging socket.

As mentioned, appropriate electronic circuitry may be located in the cavity of the recharging device 52 located behind the rear wall 78 for sensing when a power pack is positioned within the socket and for controlling the recharging of the dry cell power pack. The recharging circuit includes an additional thermocouple to sense ambient temperature in addition to battery temperature during recharging. The thermocouple for sensing ambient temperature is located in the recharger and covered so as to attenuate any effect of periodic cold drafts or other sudden temperature changes. In this way, the recharging control circuitry does not erroneously change the charging rate on the power pack. Each of the electrodes 68 through 74 include ramp portions 98 which initially contact the electrodes 38 through 44 in depressing the spring loaded electrodes 68 through 74 into the corresponding recess areas 100 of the rear wall 78. This camming action on the spring loaded electrodes 68 through 74 provides a wiping contact so as to abraid and remove debris on the electrodes to ensure a good electrical contact between each corresponding set of recharging electrodes. Because the circuitry has the ability to sense when a power pack is in the recharging socket, there is no need to turn on switches or adjust switches or the like tc effect recharging. Thus this device enables the user to simply push the power pack into the recharging unit and know that the power pack is being properly recharged. As a backup to visually indicate status of the recharger and the power supply, lights may be provided on the recharger. Such lights may, for example, indicate that the recharger is working and proper electrode contact has been made and indicate when the power pack is back up to full charge.

It is appreciated that in many instances the power pack could be covered with some debris and dirt, so that upon several uses in the recharging device, dirt may collect on the lower wall 82 of the recharging socket. To compensate for this, an opening 102 is provided in the lower wall 82 of the recharging socket. Such opening permits the clearing of any debris which may collect on the lower wall, so that as the power pack is pushed into the socket, the debris is pushed ahead of the lower region 23 of the power pack and cleared out through opening 102. Opening 102 is located relative to the wall panel 54 so that all debris is cleared down the rear of the wall and away from the frontal operative area of the recharging devices.

From the construction of both the battery pack casing and the recharging device, it is apparent that these units may remolded from plastics material. The selection of the plastics is such that it is not degradable by way of corrosive ambient conditions, is impact and abrasion resistant and is waterproof. It is appreciated that many plastics fit this category, although the most suitable plastic is ABS (acrylonitrile-butadiene-styrene) optionally mixed with a polycarbonate. Another advantage in individually forming the recharging devices is that, should a device become faulty or fail, it may be readily removed from the vertical panel and another unit replaced therefor. By making it out of a plastic injection moldable material, the curved shaped for the unit along with the ramp portion, the catch detent and other recesses and the like are readily formed in the molded product.

Thus the recharging device, according to this invention, for a lamp power pack provides a straight push in of the power pack to actuate the charging cycle. There is no need to effect changing of a switch or commit the lamp to a particular use during the recharging. This allows repair of the lamp without interrupting the recharging cycle of the dry cell battery. The contacts are positioned on both the power pack and the recharging unit so as to be remote and out of the way to avoid damage and fouling with debris in the work environment. The curvature of the unit results in a unidirectional insertion of the power pack into the recharging device to always assure the recharging cycle and thus a more reliable unit.

**Claims**

1. Combination comprising a rechargeable dry cell power pack (14) connected to a lamp (10) by electrical wiring (12), a recharging device (52) having charging electrodes (68,70,72,74) for charging the power pack (14) when electrically in contact with corresponding power pack electrodes (38,40,42,44), and means for supporting the power pack when connected to the recharging device, the combination being characterised in that the power pack (14) has a slightly curved inner face portion (34) to conform to and be adjacent to a user's hip with the power pack electrodes (38,40,42,44) positioned on such inner face portion (34) and in that the recharging device (52) comprises a socket (64) having opposed curved surfaces (76,78) with the charging electrodes (68,70,72,74) positioned on one of said opposed curved surfaces, the socket (64) being shaped and dimensioned to receive at least the lower portion of the power pack (14) in only one orientation and to support the power pack (14) in the socket (64) with the charging electrodes (68,70,72,74) in electrical contact with the power pack electrodes (38,40,42,44).

2. A combination according to claim 1, characterised in that the depth of the socket (64) is horizontally directed when in use to permit insertion of the lower portion of the power pack (14) into the socket (64) in a horizontally directed manner.

3. A combination according to claim 1 or 2 characterised in that an opening (102) is provided in said socket (64) to permit clearing debris from the socket while the power pack is pushed into the socket.

4. A combination according to claim 1, 2 or 3 characterised in that means (92,94) is provided for releasably retaining the power pack (14) in the socket during the recharging.

5. A combination according to any one of claims 1 to 4 characterised by the provision of means capable of delivering electrical power to said charging electrodes (68,70,72,74) and means for controlling the flow of electrical power to control the rate at which and the extent to which said power pack is recharged.

6. A combination according to any one of claims 1 to 5 characterised in that the charging electrodes (68, elongate to 70,72,74) are outwardly biased into the socket (64) and extend parallel to the axis of insertion of the power pack (14), the charging electrodes being brushed and displaced by the corresponding electrodes (38,40,42,44) of the power pack during insertion into the socket to ensure an electrical contact between the charging electrodes (68,70,72,74) and the power pack electrodes (38,40,42,44).

7. A combination according to any one of claims 1 to 6 characterised in that the power pack electrodes (38,40,42,44) are spaced apart and protrude from the inner face portion (34) of said power pack.

8. A combination according to claim 7 characterised in that each of the charging electrodes (68,70,72,74) is resiliently biased into said socket and is moveable laterally by power pack electrodes (38,40,42,44) as the power pack (14) is inserted into the socket.

9. A combination according to claim 6, characterised in that the charging electrodes have lead in portions (98) engageable by the power pack electrodes (38,40,42,44) to displace the charging electrodes (68,70,72,74) laterally as the power pack (14) is inserted into the socket.

10. A combination according to one of claims 1 to 9, characterised in that the recharging device (52) has a plastic injection molded body portion with an external means (58) for wall mounting of the recharging device, the socket (64) being defined in the body portion.

**Patentansprüche**

1. Kombination eines aufladbaren Trockenelement-Stromversorungsgerätes (14) das über eine elektrische Leitung (12 mit einer Lampe (10) verbunden ist, eines Ladegerätes (52) mit Ladeelektroden (68, 70, 72, 74) zum Laden des Stromversorgungsgerätes (14), wenn sie elektrisch in Kontakt mit entsprechenden Stromversorgungsgerät-Elektroden (38, 40, 42, 44) sind, und einer Einrichtung zum Halten des Stromversorgungsgerätes, wenn es mit dem Ladegerät verbunden ist, wobei die Kombination dadurch gekennzeichnet ist, daß das Stromversorgungsgerät (14) einen leicht gekrümmten Innenflächenteil (34), hat, um konform zur und benachbart der Hüfte eines Benützers zu sein, wobei die Stromversorgungsgerät-Elektroden (38, 40, 42, 44) an diesem Innenflächenteil (34) angeordnet sind, und daß das Ladegerät (52) eine Fassung (64) mit einander gegenüberliegenden gekrümmten Flächen (76, 78) hat, wobei die Ladeelektroden (68, 70, 72, 74) an einer der einander gegenüberliegenden gekrümmten Flächen angeordnet sind, wobei die Fassung (64) eine Form und Abmessung aufweist, um zumindest den unteren Teil des Stromversorgungsgerätes (14) in bloß einer Ausrichtung aufzunehmen und das Stromversorgungsgerät (14) in der Fassung (64), mit in elektrischem kontakt mit den Stromversorgungsgerät-Elektroden (38, 40, 42, 44) befindlichen Ladeelektroden (68, 70, 72, 74), zu halten.

2. Kombination nach Anspruch 1, dadurch gekennzeichnet, daß die Tiefe der Fassung (64) im Betrieb horizontal ausgerichtet ist, im ein Einführen des unteren Teils des Stromversorgungsgerätes (14) in die Fassung (64) in horizontaler Richtung zu ermöglichen.

3. Kombination nach Anspruch 1 oder 2, dadurch gekennzeichnet, daß in der Fassung (64) eine Öffnung (102) vorgesehen ist, um ein Abführen von Teilchen aus der Fassung zu ermöglichen, wenn das Stromversorgungsgerät in der Fassung gedrückt wird.

4. Kombination nach Anspruch 1, 2 oder 3, dadurch gekennzeichnet, daß eine Einrichtung (92, 94) zum lösbaren Festhalten des Stromversorgungsgerätes (14) in der Fassung beim Aufladen vorgesehen ist.

5. Kombination nach einem der Ansprüche 1 bis 4, gekennzeichnet durch das Vorsehen einer Einrichtung, die imstande ist, die Ladeelektroden (68, 70, 72, 74) mit elektrischer Energie zu versorgen, und einer Einrichtung zum Regeln des Flusses der elektrischen Energie, um die Geschwindigkeit und das Ausmaß, mit der bzw. in dem das Stromversorgungsgerät geladen wird, zu regeln.

6. Kombination nach einem der Ansprüche 1 bis 5, dadurch gekennzeichnet, daß die Ladeelektroden (68, 70, 72, 74) auswärts in die Fassung (64) hinein vorgespannt und länglich sind, um sich parallel zur Achse des Einführens des Stromversorgungsgerätes (14) zu erstrecken, wobei die Ladeelektroden von den entsprechenden Elektroden (38, 40, 42, 44) des Stromversorgungsgerätes während des Einführens in die Fassung abgestreift und verschoben werden, um eine elektrischen Kontakt zwischen den Ladeelektroden (68, 70, 72, 74) und den Stromversorgungsgerät-Elektroden (38. 40, 42, 44) sicherzustellen.

7. Kombination nach einem der Ansprüche 1 bis 6, dadurch gekennzeichnet, daß die Stromversorgungsgerät-Elektroden (38, 40, 42, 44) in Abstand voneinander vorgesehen sind und vom Innenflächenteil (34) des Stromversorgungsgerätes vorstehen.

8. Kombination nach Anspruch 7, dadurch gekennzeichnet, daß die Ladeelektroden (68, 70, 72, 74) je federnd in die Fassung hinein, vorgespannt und durch die Stromversorgungsgerät-Elektroden (38, 40, 42, 44) seitlich bewegbar sind, wenn das Stromversorgungsgerät (14) in die Fassung eingeführt wird.

9. Kombination nach Anspruch 6, dadurch gekennzeichnet, daß die Ladelektroden Einführungsteile (98) haben, mit denen die Stromversorgungsgerät-Elektroden (38, 40, 42, 44) in Eingriff bringbar sind, um die Ladeelektroden (68, 70, 72, 74) seitlich zu verschieben, wenn das Stromversorgungsgerät (14) in die Fassung eingeführt wird.

10. Kombinatioin nach einem der Ansprüche 1 bis 9, dadurch gekennzeichnet, daß das Ladegerät (52) einen aus Kunststoff gespritzten Körperteil mit einer äußeren Einrichtung (58) zur Wandbefestigung des Ladegerätes hat, wobei die Fassung (64) im Körperteil definiert ist.

## Revendications

1. Système combiné comprenant un bloc d'énergie à batteries sèches rechargeables (14), connecté à une lampe (10) par un câblage électrique (12), un dispositif de recharge (52) comportant des électrodes de charge (68, 70, 72, 74) pour charger le bloc d'énergie (14) lorsqu'elles sont en contact électriquement avec des électrodes correspondantes (38, 40, 42, 44) du bloc d'énergie et des moyens pour supporter le bloc d'énergie lorsqu'il est relié au dispositif de recharge, ce système combiné étant caractérisé en ce que le bloc d'énergie (14) possède une partie de face interne légèrement incurvée (34) pour se conformer et être adjacente à la hanche d'un utilisateur, les électrodes (38, 40, 42, 44) du bloc d'énergie étant positionnées sur cette portion de face interne (34) et en ce que le dispositif de recharge (52) comprend un socle (64), comportant des surfaces incurvées opposées (76, 78), les électrodes de charges (68, 70, 72, 74) étant positionnées sur l'une desdites surfaces incurvées opposées, le socle (64) étant conformé et dimensionné de manière à recevoir au moins la partie inférieure du bloc d'énergie (14) dans une seule orientation et à supporter le bloc d'énergie (14) dans le socle (64), les électrodes de charge (68, 70, 72, 74) étant en contact électrique avec les électrodes (38, 40, 42, 44) du bloc d'énergie.

2. Système combiné selon la revendication 1, caractérisé en ce que la profondeur du socle (64) est orientée horizontalement lorsqu'il est en service, de manière à permettre l'introduction de la portion inférieure du bloc d'énergie (14) dans le socle (64) dans une direction horizontale.

3. Système combiné selon la revendication 1 ou 2, caractérisé en où qu'on prévoit une ouverture (102) dans ledit socle (64) de manière à nettoyer le socle des débris lorsque le bloc d'énergie est poussé dans le socle.

4. Système combiné selon la revendication 1, 2 ou 3, caractérisé en ce qu'on prévoit des moyens (92, 94) pour maintenir de façon libérale le bloc d'énergie (14) dans le socle, lors de l'opération de recharge.

5. Système combiné selon l'une quelconque des revendications 1 à 4, caractérisé en ce qu'on prévoit des moyens permettant de fournir de l'énergie électrique auxdites électrodes de charge (68, 70, 72, 74) et des moyens pour commander le débit de l'énergie électrique, afin de commander la vitesse et le taux de recharge du bloc d'énergie.

6. Système combiné selon l'une quelconque des revendications 1 a 5, caractérisé en ce que les électrodes de charge (68, 70, 72, 74) sont sollicitées vers l'extérieur dans le socle (64) et elles sont allongées de manière à s'étendre parallèlement à l'axe d'introduction du bloc d'énergie (14), les électrodes de charges étant brossées et déplacées par des électrodes correspondantes (38, 40, 42, 44) du bloc d'énergie, lors de l'introduction dans le socle pour assurer un contact électrique entre les électrodes de charge (68, 70, 72, 74) et les électrodes (38, 40, 42, 44) du bloc d'énergie.

7. Système combiné selon l'une des revendications 1 à 6, caractérisé en ce que les électrodes (38, 40, 42, 44) du bloc d'énergie sont espacées les unes des autres et font saillie de la position.

8. Système combiné selon la revendication 7, caractérisé en où que chacune des électrodes de charge (68, 70, 72, 74) est sollicitée élastiquement dans ledit socle et elle est déplaçable latéralement par les électrodes (38, 40, 42, 44) du bloc d'énergie lorsque le bloc d'énergie (14) est introduit dans le socle.

9. Système combiné selon la revendication 6, caractérisé en ce que les électrodes de charge comportent des conducteurs dans des positions (98) pouvant venir en prise avec les électrodes (38, 40, 42, 44) du bloc d'énergie, pour déplacer latéralement les électrodes de charge (68, 70, 72, 74) lorsque le bloc d'énergie (14) est introduit dans le socle.

10. Système combiné selon l'une des revendications 1 à 9, caractérisé en ce que le dispositif de recharge (52) possède une portion de corps en matière plastique moulée par injection avec des moyens externes (58) pour un montage mural du dispositif de recharge, le socle (64) étant délimité dans la portion du corps.

FIG.1.

FIG.2.

FIG.3.

FIG.4.

0 121 292

FIG. 5.

4

FIG.6.

FIG.7.